# EUROPEAN PATENT APPLICATION

(11) **EP 4 085 779 A2**
(43) Date of publication of application: **09.11.2022**
(21) Application number: 22171834.9
(22) Date of filing: 05.05.2022
(51) Int. Cl.: A41D 1/00, G01S 5/14, G01S 13/76, G01S 13/87

(54) **ULTRA-WIDEBAND, REAL TIME LOCATING SYSTEM**

(30) Priority: 05.05.2021 IT 202100011474
(71) Applicant: Engynya S.r.l., 47924 Rimini (IT)
(72) Inventor: DE ANGELI, Matteo, 47822 SANTARCANGELO DI ROMAGNA (IT)
(74) Representative: Conti, Marco

(57) **Abstract**

An ultra-wideband (UWB), real time locating system (RTLS) (1), comprises: a locating device (21), movable in a workspace (20) and configured to transmit and receive ultra-wideband (UWB) signals; a plurality of anchors (3), disposed at stationary positions in the workspace (20) and each configured to communicate with one or more of the other anchors of the plurality (3) and to transmit and receive ultra-wideband (UWB) signals; each anchor (3) being configured to exchange a position signal (6) with the locating device (21), as a function of which it is possible to calculate a flight time of the position signal (6) to determine a distance of the locating device (21) from the anchor (3); a processing unit (4); a worksuit (2) wearable by an operator (P), where the locating device (21) is integrated in the worksuit (2).

## Description

This invention relates to an ultra-wideband real time locating system and method; this invention also relates to a worksuit.

In the field of warehouse management for the location of objects such as trolleys or goods, for example, various types of locating systems are known, which vary in terms of the technology used and the methods for processing the data detected by a control unit of the system. For example, there are prior art locating systems based on ultra-wideband (UWB) technology. These systems traditionally include a plurality of anchors, stationary relative to a workspace and an RFID tag, positioned on the object to be located. In the locating systems of this type, the plurality of anchors and the tag positioned on the object communicate with each other in order to identify the distance of the tag from each anchor of said plurality. Once the distance of the tag from one plurality of anchors (preferably at least four) of the plurality of anchors is known, a control unit determines the position of the object within the workspace with a high level of precision and reliability. Examples of these ultra-wideband UWB locating systems are described in the following patent documents: US2015355311, US2013063251, US9519047, US8674828 and in the Italian patent document 102018000003687 (in the name of the same Applicant). Italian patent document 102018000003687 describes the application of an UWB locating system to locate people. In many case, however, people working in warehouses or other workspaces are reluctant to wear a locating device and tend to remove and abandon it if not adequately supervised. There is therefore a need for a locating system that is not easy for an individual operator to remove.

Patent documents WO2016196863A1 and CN111864916 describe ultra-wideband, real time locating systems; none of these satisfactorily meets market needs, however.

This invention has for an aim to provide an ultra-wideband, real time locating system and method to overcome the above mentioned disadvantages of the prior art. This aim is fully achieved by the system and method of this disclosure as characterized in the appended claims.

This disclosure provides a real time locating system (RTLS). More specifically, the locating system of this disclosure is an ultra-wideband (UWB) system.

The locating system comprises(at least) one locating device, movable in a workspace, where the locating device is configured to transmit and receive ultra-wideband (UWB) signals. In un example embodiment, the locating device may include an RFID tag.

The locating system comprises a plurality of anchors, each configured to communicate with one or more of the other anchors of the plurality and to transmit and receive ultra-wideband (UWB) signals. The anchors of the plurality are disposed at stationary positions in the workspace. Each anchor of the plurality of anchors is configured to exchange a position signal with the locating device, as a function of which it is possible to calculate a flight time of the position signal to determine a distance of the locating device from the anchor.

The system comprises a processing unit configured to determine a position of the locating device as a function of the distance of the locating device from the plurality of anchors.

The system also comprises a worksuit wearable by an operator. That way, the only way the operator can remove the locating device is to take off the worksuit. In an embodiment the worksuit is an outfit used for working such as, for example, a mechanic suit or a heat suit for working in a refrigerated environment.

In an example, the locating device is placed in the worksuit. The locating device may be placed partly or entirely in the worksuit. The fact that the locating device is placed entirely in the worksuit has the advantage of making worksuit production easier and allowing the locating device to be removed when the worksuit needs to be washed.

In an example, the worksuit comprises a pocket. Preferably, the locating device is placed entirely inside the pocket. The locating device may be sewn into the worksuit or sealed in the worksuit. Preferably, the locating device fits snugly inside the pocket. The locating device may be surrounded at least partly by the fabric the worksuit is made of.

In an example, the locating device may be sewn into the worksuit. In an embodiment, the worksuit is an exoskeleton worksuit; more specifically, the worksuit may be a passive exoskeleton worksuit or an active exoskeleton worksuit. By exoskeleton worksuit is meant a brace-like outfit wearable by the operator to facilitate movements. The exoskeleton may be passive: in this case, it facilitates movements with lever systems. The exoskeleton may be active: in this case, it comprises a motor which assists certain movements (for example, it may help lift heavy weights). The locating device may be integrated in the exoskeleton worksuit.

Preferably, the locating device includes a battery and is configured to receive a wireless charge to charge the battery. For this purpose, the system may comprise a wireless charging device, configured to be removably coupled to the locating device to transmit wireless charging power thereto.

More specifically, in an embodiment, the locating device may include a magnet, configured to be removably attached to the locating device; in this case, therefore, the locating device includes a portion of ferromagnetic material configured to be removably coupled to the magnet of the wireless charging device. In another embodiment, the locating device includes a magnet, configured to be removably attached to the wireless charging device; in this case, therefore, the wireless charging device includes a portion of ferromagnetic material configured to be removably coupled to the magnet of the locating device.

The wireless charging device may be, for example, of the type described in patent document EP3151366A1.

In an embodiment, the wireless charging device includes an illuminated indicator (for example, a warning light) configured to emit a signal in response to its being connected to the locating device. Instead of being illuminated, the indicator may be an acoustic or other type of indicator. In an embodiment, the indicator may be integrated in the locating device alternatively or in addition to the indicator that is integrated in the wireless charging device.

In an embodiment, the system comprises a plurality of locating devices, movable in the workspace (independently of one another) and configured to transmit and receive ultra-wideband (UWB) signals. In this embodiment, the system comprises, for each of the plurality of locating devices, a respective worksuit wearable by a respective operator, where the locating device is integrated in the worksuit. The system also comprises, for each of the plurality of locating devices, a wireless charging device, configured to be removably coupled to the locating device to transmit wireless charging power thereto. The system comprises a power supply structure, wherein the wireless charging devices are mounted on the power supply structure. Thus, there is a single power supply structure with which the plurality of wireless charging devices are associated. That way, when operators take off their worksuits, they can place them in the same structure for charging; thus, the structure also acts as a wardrobe. For this purpose, the power supply structure preferably includes a clothes hanger where the worksuits can be hung while being wirelessly charged.

In an embodiment, the structure includes a supporting member configured to be connected to a power network (to receive electrical power). The structure also comprises a plurality of ribbons and a corresponding plurality of springs, wherein each of the plurality of ribbons has a first end connected to the supporting member to receive electrical power and a second end with a respective wireless charging device mounted on it, wherein each ribbon is movable by the effect of the respective spring from an extracted position, in which it is at least partly extracted from the supporting member, to a retracted position, where it is positioned inside the supporting member. That way, when the wireless charging device is not being used, it is retracted into the supporting member under the action of the spring, thus minimizing occupied space and reducing the risk of entangling the ribbons.

In an embodiment, the system comprises (for each locating device) a shell which encloses the locating device and the battery; preferably, the shell is impermeable. That way, the worksuit can be washed without removing the locating device and the battery. That way, the locating device and the battery can be contained or placed in the worksuit or sewn or sealed in an inside pocket of the worksuit. The pocket may be inaccessible from the outside.

In an embodiment, the locating device includes a flexible PCB. The flexible PCB is robust and is not damaged by the movements of the operator.

In an example embodiment, the system (or the worksuit) of this disclosure could be used in a person and trolley or person and vehicle anti-collision system. Examples of such person and trolley or person and vehicle anti-collision systems are provided in Italian patent documents 102018000003687 and 102018000003692, in the name of the present Applicant and incorporated herein by reference. It is expressly understood that all the features of the anti-collision systems described in Italian patent documents 102018000003687 and 102018000003692 can be applied to the electronic smart labels of this embodiment.

As regards the anchors, these may be integrated in the warehouse ceiling and/or floor.

In an embodiment, the anchors are mounted on warehouse shelves; more specifically, they may be mounted on shelf posts and/or rails of the warehouse. By "posts" is meant vertical members of the shelves and by "rails" is meant horizontal members of the shelves.

In an embodiment, the anchors (or some of them) are defined by (or are) a corresponding plurality of electronic smart labels. Each electronic smart label includes an enclosure connectable to a warehouse shelf (specifically, a bracket or a rail); an electronic label display mounted on the enclosure; a processor located in the enclosure and configured to receive label data and to show an image representing the label data on the electronic label display. Further, each electronic smart label is also configured to transmit and receive ultra-wideband (UWB) position signals to perform the function of an anchor. As regards the electronic smart labels configured to perform the function of anchors of the locating system, these may be characterized by one or more of the aspects described in Italian patent document 102020000024826 in the name of the present Applicant and incorporated herein by reference. It is expressly understood that all the features of the electronic smart labels described in Italian patent document 102020000024826 can be applied to the electronic smart labels of this embodiment.

Further, the warehouse may include a plurality of electronic non-smart (or traditional) labels which also include an enclosure, an electronic label display and a processor, but which are not configured to transmit and receive ultra-wideband (UWB) position signals.

This disclosure also provides a worksuit comprising a locating device that is configured to transmit and receive ultra-wideband (UWB) signals. For example, the locating device may be placed in the worksuit or it may be sewn into the worksuit.

This disclosure also provides a warehouse, comprising the workspace and the real time locating system according to one or more aspects of this disclosure; preferably, the warehouse also includes a plurality of shelves. This disclosure also provides a method for real-time location (RTLS). The method comprises a step of preparing a plurality of anchors, disposed stationary in a workspace and configured to transmit and receive ultra-wideband (UWB) signals. The method comprises a step of preparing a locating device, movable in the warehouse and configured to transmit and receive ultra-wideband (UWB) signals. The method comprises a step of sending at least one ultra-wideband (UWB) position signal from the locating device to one or more anchors of the plurality of anchors or vice versa, from one or more anchors of the plurality of anchors to the locating device.

The method comprises a step of determining a distance of the locating device from one or more anchors of the plurality of anchors by calculating a flight time of the position signal by means of a processing unit. The step of determining the distance is preferably carried out by a processing unit. Preferably, the locating device is placed in a worksuit wearable by an operator. In an example, the locating device is integrated in a worksuit wearable by an operator. For example, the locating device is sewn into the worksuit.

These and other features will become more apparent from the following description of a preferred embodiment, illustrated by way of non-limiting example in the accompanying drawings, in which:

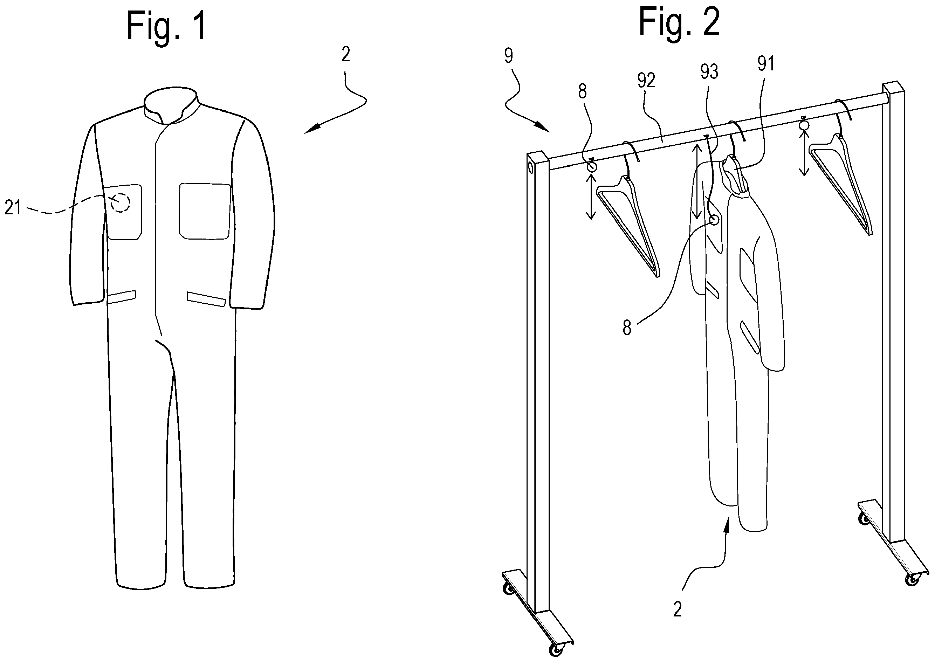

- Figure 1 illustrates an embodiment of a worksuit of this disclosure;
- Figure 2 illustrates a power supply structure including a clothes hanger to allow charging and hanging a plurality of worksuits according to Figure 1;

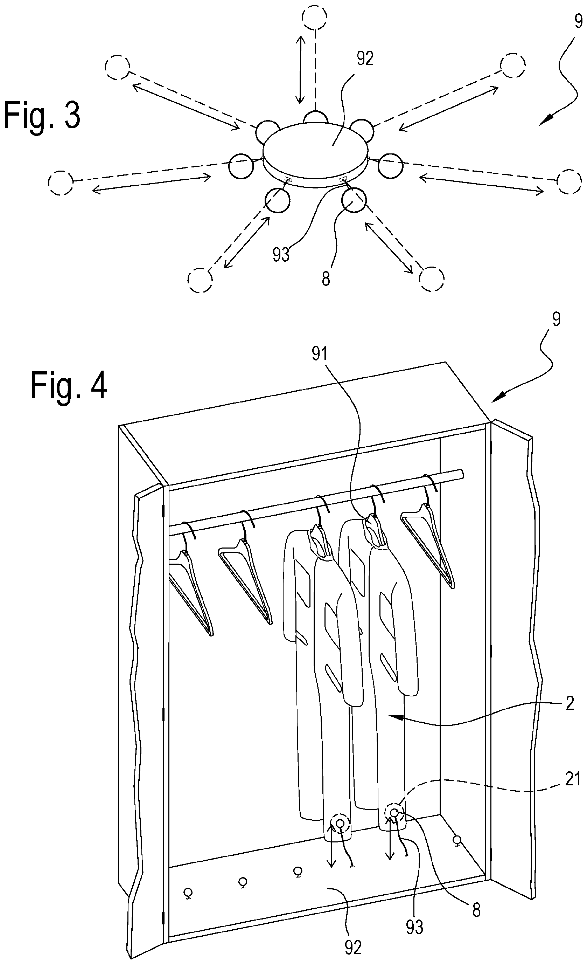

- Figure 3 illustrates a power supply structure, without a clothes hanger, to allow charging a plurality of worksuits according to Figure 1;
- Figure 4 illustrates another embodiment of a power supply structure including a clothes hanger to allow charging and hanging a plurality of worksuits according to Figure 1;

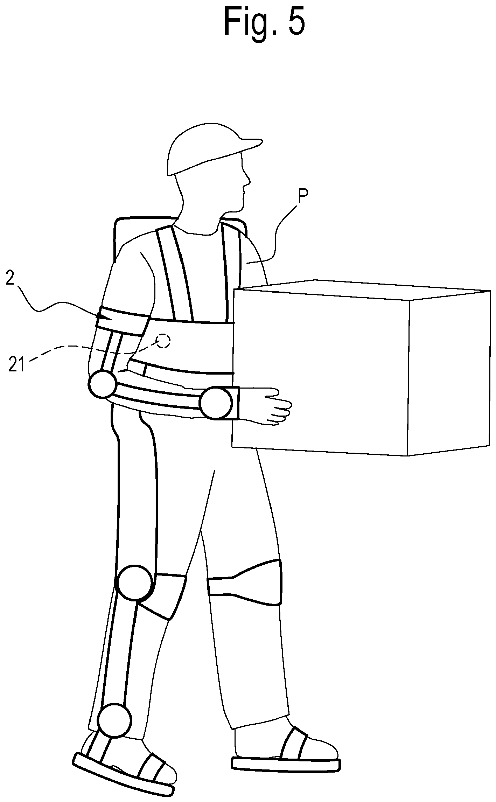

- Figure 5 illustrates an exoskeleton worksuit according to an embodiment of this disclosure, worn by an operator;

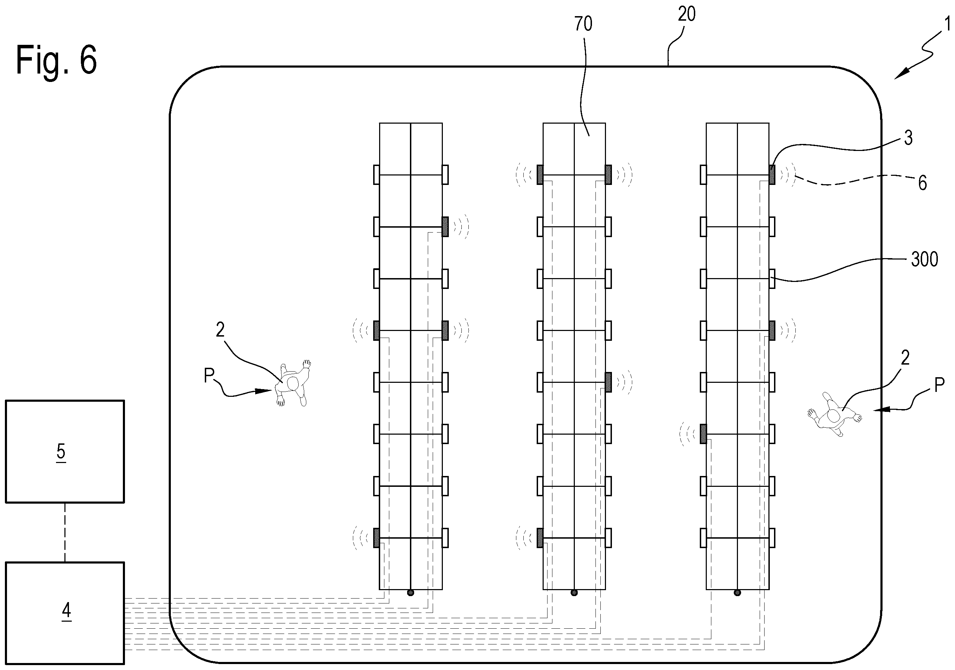

- Figure 6 illustrates a real time locating system according to this disclosure.

According to an aspect of this disclosure, the numeral 1 denotes a real-time locating system.

The system 1 is usable in a warehouse defining a workspace 20. The warehouse may comprise a plurality of shelves 70.

The system 1 comprises a locating device 21. The locating device 21 is integrated in a worksuit 2 which is wearable by an operator P. The locating device 21 is configured to transmit and receive ultra-wideband (UWB) signals.

In an embodiment, the worksuit 2 is an outfit used for working; the locating device 21 is associated with the worksuit (preferably sewn in an inside pocket not accessible to the operator P). In an example embodiment, the locating device 21 is sewn into an inside pocket provided at a breast pocket of the worksuit 2. In another example embodiment, the locating device 21 is sewn into an inside pocket provided on a leg of the worksuit 2.

In an embodiment, the worksuit 2 is an active or passive exoskeleton worksuit; the locating device 21 is associated with the exoskeleton worksuit (in this case, too, preferably sewn in an inside pocket not accessible to the operator P).

Preferably, the system 1 comprises a plurality of locating devices 21, integrated in a plurality of worksuits 2 wearable by a respective plurality of operators P.

The system 1 comprises a plurality of anchors 3, each configured to communicate with one or more of the other anchors 3 and to transmit and receive ultra-wideband (UWB) signals. The anchors 3 of the plurality are disposed at stationary positions in the workspace 20. Each anchor 3 is configured to exchange position signals 6 with the locating device 21. The distance of the locating device 21 from the anchor 3 can be determined as a function of the flight time of the position signal 6 between the locating device 21 and the anchor 3.

The system 1 comprises a processing unit 4. The processing unit 4 is connected to the plurality of anchors 3. In an embodiment, each anchor 3 calculates the flight time of the position signal 6 exchanged with the locating device 21 and transmits that flight time to the processing unit 4, which determines the distance of the locating device 21 from the anchor 3. In another embodiment, each anchor 3 itself calculates the distance between itself and the locating device 21 as a function of the flight time of the position signal 6.

The processing unit 4 is also configured to determine a position of the locating device 21 (in the workspace 20) as a function of the distance of the locating device 21 from the plurality of anchors 3.

The system 1 comprises a memory 5, connected to the processing unit 4; in an embodiment, the memory 5 is connected remotely to the processing unit 4. The processing unit 4 may be configured to save to the memory 5 a history of the positions of the locating device 21. It is thus possible to reconstruct the movements of the operator P inside the workspace 20. The system 1 comprises a wireless charging device 8, configured to be removably coupled to the locating device 21 to transmit wireless charging power thereto. Preferably, the system 1 comprises a plurality of wireless charging devices 8, configured to be removably coupled to a corresponding plurality of locating devices 21 to transmit wireless charging power thereto. More specifically, each wireless charging device 8 is configured to be removably coupled to a corresponding locating device 21 by a magnet, which may be associated with the wireless charging device 8 or, alternatively, with the locating device 21.

The system 1 comprises a power supply structure 9. The power supply structure 9 may be positioned inside or outside the workspace 20. The wireless charging devices 8 are mounted on the power supply structure 9. In an embodiment, the power supply structure 9 includes a clothes hanger 91 on which the worksuits 2 can be hung during wireless charging. More specifically, the clothes hanger 91 may include a clothes hanger rod and a plurality of hangers, on which the plurality of worksuits 2 can be hung.

In an embodiment, the power supply structure 9 includes a supporting member 92 configured to be connected to a power network. The power supply structure 9 includes a plurality of ribbons 93; each of the plurality of ribbons 93 has a first end connected to the supporting member 92 to receive electrical power and a second end with a respective wireless charging device 8 mounted on it. Each ribbon 93 is movable between an extracted position, in which it is at least partly extracted from the supporting member 92, and a retracted position, where it is positioned inside the supporting member 92. Preferably, the power supply structure 9 includes a plurality of springs (one for each ribbon 93); each ribbon 93 is movable from the extracted position to the retracted position under the action of the respective spring. Preferably, the ribbons 93 are flexible; thus, for each ribbon 93, the power supply structure 9 may comprise a roller; thus, when at the retracted position, the ribbon 93 is wound round the roller. The spring and, if provided, the roller are positioned inside the rod of the supporting member 92 (and are thus not visible in the accompanying drawings).

The supporting member 92 may be integrated in the clothes hanger 91 (that is, the two elements may at least partly coincide). More specifically, in an embodiment, the supporting member 92 of the power supply structure 9 includes a hollow rod on which the hangers for the worksuits 2 are hung; the ribbons 93, at the retracted position, are housed inside the hollow rod of the supporting member 92. Thus, in this embodiment, the rod of the supporting member 92 also acts as a rod of the clothes hanger 91.

In another embodiment, the supporting member 92 is distinct from the rod of the clothes hanger 91. More specifically, the supporting member 92 may be positioned under the rod of the clothes hanger 91 (for example, it may form a bottom wall of the clothes hanger 91); thus, the worksuits 2 hanging from the rod of the clothes hanger 91 are positioned between the rod of the clothes hanger 91 and the supporting member 92.

In another embodiment, there is a supporting member 92 but not a clothes hanger 91 so when the worksuits 2 are undergoing wireless charging, they are not hanging from a clothes hanger 91.

In an embodiment, the system 1 comprises a plurality of electronic smart labels which act as anchors 3; in effect, the electronic smart labels are configured to exchange ultra-wideband (UWB) position signals 6 with the locating devices 21. The electronic smart labels 3 are mounted on the shelves of the warehouse. The system 1 may also comprise a plurality of traditional electronic labels 300. The traditional electronic labels 300 do not perform the function of exchanging ultra-wideband (UWB) position signals 6.

Each electronic smart label (as well as each traditional electronic label 300) includes an enclosure which may be mounted on a rail especially made on a corresponding shelf. Each electronic smart label (as well as each traditional electronic label 300) also includes an electronic display. The electronic display may show the operator P information relating to the goods stored on the corresponding shelf (for example, description or code of goods) to help the operator identify the goods. The electronic display may also show information relating to the shelf (for example, the number of the shelf).

## Claims

1. An ultra-wideband (UWB), real time locating system (RTLS) (1), comprising
- a locating device (21), movable in a workspace (20), where the locating device (21) is configured to transmit and receive ultra-wideband (UWB) signals;
- a plurality of anchors (3), each configured to communicate with one or more of the other anchors of the plurality (3) and to transmit and receive ultra-wideband (UWB) signals, where the anchors of the plurality (3) are disposed at stationary positions in the workspace (20); each anchor (3) of the plurality of anchors being configured to exchange a position signal (6) with the locating device (21), as a function of which it is possible to calculate a flight time of the position signal (6) to determine a distance of the locating device (21) from the anchor (3);
- a processing unit (4) configured to determine a position of the locating device (21) as a function of the distance of the locating device (21) from the plurality of anchors (3),
**characterized in that** it comprises a worksuit (2) wearable by an operator (P), where the locating device (21) is integrated in the worksuit (2).

2. The system (1) according to claim 1, wherein the locating device (21) includes a battery and is configured to receive a wireless charge to charge the battery.

3. The system (1) according to claim 2, comprising a wireless charging device (8), configured to be removably coupled to the locating device (21) to transmit wireless charging power thereto.

4. The system (1) according to claim 3, wherein the wireless charging device (8) includes a magnet, configured to be removably attached to the locating device (21), which includes a portion of ferromagnetic material or, vice versa,
the locating device (21) includes a magnet, configured to be removably attached to the wireless charging device (8), which includes a portion of ferromagnetic material.

5. The system (1) according to claim 3 or 4, wherein the wireless charging device (8) includes an illuminated indicator, configured to emit a signal in response to its being connected to the locating device (21).

6. The system (1) according to any one of claims 2 to 5, comprising:
- a plurality of locating devices (21), movable in the workspace (20) and configured to transmit and receive ultra-wideband (UWB) signals;
- for each of the plurality of locating devices (21), a respective worksuit (2) wearable by a respective operator (P), where the locating device (21) is integrated in the worksuit (2);
- for each of the plurality of locating devices (21), a wireless charging device (8), configured to be removably coupled to the locating device (21) to transmit wireless charging power thereto;
- a power supply structure (9), wherein the wireless charging devices (8) are mounted on the power supply structure (9).

7. The system (1) according to claim 6, wherein the power supply structure (9) includes a clothes hanger (91) on which the worksuits (2) can be hung during wireless charging.

8. The system (1) according to claim 6 or 7, wherein the power supply structure (9) includes:
- a supporting member (92) configured to be connected to a power network;
- a plurality of ribbons (93) and a corresponding plurality of springs, wherein each of the plurality of ribbons (93) has a first end connected to the supporting member (92) to receive electrical power and a second end with a respective wireless charging device (8) mounted on it, wherein each ribbon (93) is movable by the effect of the respective spring from an extracted position, in which it is at least partly extracted from the supporting member (92), to a retracted position, where it is positioned inside the supporting member (92).

9. The system (1) according to any one of claims 2 to 8, comprising a shell which encloses the locating device (21) and the battery, wherein the shell is impermeable.

10. The system (1) according to any one of the preceding claims, wherein the locating device (21) includes a flexible PCB.

11. The system according to any one of the preceding claims, wherein the worksuit (2) is an active or passive exoskeleton worksuit.

12. The system according to any one of the preceding claims, wherein the worksuit (2) comprises a pocket and the locating device (21) is placed entirely inside the pocket.

13. The system according to any one of the preceding claims, wherein the locating device (21) is placed snugly entirely inside the pocket.

14. A worksuit (2) comprising a locating device (21), wherein the locating device (21) is configured to transmit and receive ultra-wideband (UWB) signals.

15. A method for real-time location (RTLS), comprising the following steps:
- preparing a plurality of anchors (3), disposed stationary in a workspace and configured to transmit and receive ultra-wideband (UWB) signals;
- preparing a locating device (21), movable in the workspace (20) and configured to transmit and receive ultra-wideband (UWB) signals;
- sending at least one ultra-wideband (UWB) position signal (6) from the locating device (21) to one or more anchors of the plurality of anchors (3), or vice versa;
- determining a distance of the locating device (21) from one or more anchors of the plurality of anchors (3) by calculating a flight time of the position signal (6),
- determining a position of the locating device (21) as a function of the distance of the locating device (21) from the plurality of anchors (3);
**characterized in that** the locating device (21) is integrated in a worksuit (2) which is wearable by an operator (P).
